# EUROPEAN PATENT SPECIFICATION

(11) **EP 4 448 949 B1**
(45) Date of publication and mention of the grant of the patent: **12.11.2025**
(21) Application number: 22844000.4
(22) Date of filing: 16.12.2022
(51) Int. Cl.: F02M 27/04, C02F 1/48, F16N 39/00

(54) **MAGNETIC ANTI-SCALING DEVICE**
MAGNETISCHE ANTIKESSELSTEINVORRICHTUNG
DISPOSITIF MAGNÉTIQUE ANTI-ENTARTRAGE

(30) Priority: 17.12.2021 BR 102021025695
(43) Date of publication of application: 23.10.2024
(73) Proprietor: Vallourec Soluções Tubulares do Brasil S.A., 30640-010 Belo Horizonte - MG (BR); Petróleo Brasileiro S.A. - Petrobras, 20031-912 Rio de Janeiro - RJ (BR)
(72) Inventor: DEROUBAIX, Antoine, 59131 Rousies (FR); DA SILVA, Jorge Alberto, 06721-290 Cotia - SP (BR); DE SOUZA JÚNIOR, José Roberto, 13412-280 Piracicaba - SP (BR); PUSARD, Mickael, 25230 Vandoncourt (FR); DA FONSECA QUINTANILHA, Mirela, 28896-076 Rio das Ostras - RJ (BR); LOPES NOGUEIRA, Raynel, 28860-000 Casimiro de Abreu - RJ (BR); OLIVEIRA DE OLIVEIRA, Paulo Guilherme, 20231-030 Rio de Janeiro - RJ (BR); DUARTE FERREIRA, Marcus Vinicius, 20271-030 Rio de Janeiro - RJ (BR); SALATIEL DE OLIVEIRA, Fernando, 11010-310 Santos - SP (BR); LEIBSOHN MARTINS, Andre, 21941-915 Rio de Janeiro - RJ (BR)
(74) Representative: Ben Dhia, Arwa
(86) International application number: PCT/BR2022/050500
(87) International publication number: WO 2023/108242

(56) References cited:
- WO-A1-2006/029203
- US-A- 5 348 050
- US-A- 5 366 623
- US-A- 5 453 188
- US-A- 5 753 124

## Description

### FIELD OF APPLICATION

This invention refers to a device and a tubular equipment that, through concentration of magnetic flow inside it, increases the magnetic flow density to a suitable level, thus inhibiting scales at the inner wall of piping and reducing scale at equipment (valves, connections etc.) upstream. The device described herein can be installed at any piping used in the fluid transport, including submarine oil pipelines. These fluids can be oils, lubricants, gases, steams, water, oil, or sundry liquids.

### Background

Scaling is a usual concern in many industries, being highly present at equipment under non-constant pressure and/or temperature, such as heat exchangers, valves, boilers and cooling towers. Scaling-related concerns also affect the oil and gas industry, particularly in pipelines used for oil extraction, and require repairs into the wells, with recurrent stoppages and high costs associated. The traditional strategies to the scale prevention consist in a continuous injection of chemical products, most of which imply huge expenses, environmental impact, and limited efficiency. So, alternatives to the scale prevention have been searched, and a strategy for such consists in using magnetic devices.

The magnetic treatment is a promising alternative for scaling prevention, particularly by using permanent magnets as generating source of magnetic flow. So, the technology is advantageously passive, without need of being activated either by electric power or hydraulic pressure.

The prior art document Pl0901552-3 also discloses a hydrodynamic-magnetic device to prevent deposition of inorganic solid minerals forming depositions and scales in oil columns. Nevertheless, this is an intrusive device and the passage of fluid among the magnets limits its application in the oil industry (such as deep waters). Additionally, intrusive devices can reduce the fluid flow. One of the advantages of the device from this invention for its use in the oil industry is the fact of being non-intrusive, which allows its use in hardly accessible and hostile environments without reduction in the oil flow.

The device of the patent PI 1104037-8 intends to promote a magnetic field inside the piping traversed by a certain fluid. For such, magnets are placed around the existing piping. In addition to requiring an unusual installation process and an increase of the external diameter of pipes, the use of such devices in the oil industry gives rise to another significant concern. Most piping of the oil industry is formed of ferromagnetic materials, that either reduce or eliminate the intensity of the magnetic field generated inside the piping, thus also reducing or eliminating the effectiveness of the treatment. On its turn, the device of this invention can be used as part of the manufacture column (or fluid piping) without any impact on the usual installation procedure. Moreover, the device is manufactured from a material that does not reduce the magnetic field generated by the magnets.

The patent PI 1003774-8 also discloses improvements to magnetic anti-scaling devices to be used in fluid transport piping. Nevertheless, the mechanic improvements that provide robustness to the system are poorly described. On its turn, this invention provides details on the mechanic arrangement that allows the magnet positioning and improves the robustness of the system, so as to permit its application at high pressure and temperature environments (such as sea oil wells). Besides, this invention provides different possible magnetic arrangements to be used in the device, thus allowing a concentration of the magnetic field not only at the core section, but also at various sections throughout the device.

The patent US5348050A discloses an anti-scaling device, according to the preamble of claim 1.

Despite the well-known different magnetic devices for scaling prevention inside piping, there is no prior art system that is suitable to treat scaling in oil submarine piping. This invention addresses a passive and non-intrusive magnetic device, that can be installed as integrating part of the manufacture column.

The device disclosed and described herein pioneers in using an axisymmetric topology for its installation at the piping walls, as well as a magnetic flow concentration topology that allows reaching higher levels of magnetic flow density inside the piping traversed by the fluid to be treated.

### Objectives of the Invention

A first objective of the invention is to provide a device and tubular equipment that, through generation of a high level of magnetic flow density, may inhibit scales at the inner wall of piping. The device described herein can be installed at any piping used in the fluid transport, including submarine oil pipelines. These fluids can be oils, lubricants, gases, steams, water, oil, or sundry liquids.

### Summarized description of the invention

The objectives of the invention are achieved through a magnetic anti-scaling device comprising an axisymmetric magnetic arrangement confined between a non-ferromagnetic internal tube with fluid flow inside it, an external tube concentrically positioned in relation to the internal tube, and two diameter transition elements, each of them at one end of the external and internal tubes; wherein the magnetic arrangement is formed by, at least, one arrangement section comprising a plurality of permanent magnets circumferentially placed at a non-ferromagnetic cylindric support, and wherein the magnetic arrangement presents, at least, a concentration plan of the magnetic flow density in a perpendicular direction to the fluid flow.

The internal tube has an outer diameter (OD) lower than the inner diameter (ID) of the cylindric supports of magnetic arrangements, so that the cylindric supports are adjusted outside this internal tube.

The external tube is concentric to the internal tube but has an inner diameter (ID) higher than the outer diameter (OD) of the internal tube, so that the difference between the ID of the external tube and OD of the internal tube is sufficient to allow hosting the magnetic arrangements. Therefore, the inner diameter (ID) of the external tube is higher than the outer diameter (OD) of the cylindric supports of magnetic arrangements. The external tube can have openings for pressure equalization that may present the form of round holes, tears, windows, or any format allowing pressure equalization. The internal and external tubes and the diameter transition elements (such as crossover connections) are formed from a material having relative magnetic permeability lower than, or close to 1, preferably between 0.99 and 1.01. In addition, the internal and external tubes and diameter transition elements are formed from nickel alloys (Inconel 718, 625), aluminum alloys, austenitic steels, duplex steels or super-duplex steels.

Preferably, the internal and external tubes and the diameter transition elements are formed of Inconel 718.

The magnetic anti-scaling device can comprise, at least, an absorber within the space confined between the internal tubular element, the external tubular element and the two diameter transition elements. The magnetic anti-scaling device can also comprise, at least, one spacer within the space confined between the internal tubular element, the external tubular element and the two diameter transition elements. Preferably, there are a spacer and a shock absorber at each side of the magnetic arrangement, but an only absorber can be used in the device, that is not necessarily positioned at its end. Preferably, spacers are positioned between the magnets supports and the shock absorber. Spacers are preferably made of nitrile rubber.

The magnets used are of High Energy Magnets type that, on their turn, have a suitable and continuous magnetic field, being confined between the external wall of piping with fluid flow inside and the internal wall of the external tube, in axisymmetric topology that allows concentrating the magnetic flow inside the internal tube. Preferably, the magnets placed in the magnetic arrangement are permanent NdFeB magnets.

The pioneer magnetic arrangement developed for the device of this invention allows reaching higher density levels of magnetic flow inside the internal tube, thus making the magnetic treatment feasible and more efficient.

The axisymmetric arrangement may comprise at least one magnetic arrangement section perpendicular to the magnets the magnetic poles of which are perpendicularly oriented towards the wall of piping with fluid flow inside it, and at least one magnetic arrangement section parallel to the magnets the magnetic poles of which are parallelly oriented towards the wall of piping with fluid flow inside it.

The perpendicular magnetic arrangement section comprises a first segment comprising half of magnets, wherein all the poles are oriented towards the centripetal direction, and a second segment containing the other half of magnets, wherein all the poles are oriented towards the centrifugal direction. The parallel magnetic arrangement section comprises a first segment containing half of the magnets, wherein all the poles are oriented towards a first sense in parallel to the tube and at the same sense of the fluid flow, and a second segment containing the other half of magnets, wherein all the poles are oriented towards a second sense opposite to the first, and constantly in parallel to the tube.

According to the invention, the axisymmetric arrangement can comprise a plurality of perpendicular magnetic arrangement sections and a plurality of parallel magnetic arrangement sections positioned alternately to each other, provided that parallel arrangements are placed at the two ends.

According to another embodiment of the invention, the axisymmetric arrangement comprises a plurality of perpendicular magnetic arrangement sections and a plurality of parallel magnetic arrangement sections alternately to each other, wherein perpendicular magnetic arrangement sections are positioned at the two ends of the axisymmetric arrangement.

In the axisymmetric arrangement, the perpendicular magnetic arrangements can be positioned alternately with poles oriented towards opposite directions, and the parallel magnetic arrangements can be positioned alternately with poles oriented towards opposite directions.

In the embodiments using alternation of perpendicular magnetic arrangement sections with parallel arrangement sections, several concentration plans of magnetic field are formed, being one of them at each region corresponding to a perpendicular arrangement.

According to another embodiment of the invention, the axisymmetric arrangement comprises one or several perpendicular magnetic arrangement sections at the core portion, and a plurality of parallel magnetic arrangement sections at each side of the at least one core perpendicular magnetic arrangement section, wherein the adjacent parallel magnetic arrangement sections have the same orientation of poles. In this embodiment, the concentration plan of magnetic field formed presents higher magnetic concentration at the core portion than at the previously described embodiments.

The invention also uses connectors, meaning any element intended to gather the ends of the piping segment wherein the magnetic anti-scaling device is coupled to the remaining portion of the piping of the system that shall host the device, thus allowing the fluid to be treated traversing the concentration region of magnetic flow. Examples of possible connectors encompass flanges, crossovers, threaded connections, and welded connections. So, there is no need of using welded connections inside the anti-scaling device, which simplifies the assembly of the anti-scaling device at the piping. The exclusion of welded connections improves the performance of the anti-scaling device, as welding may compromise the operation of magnets.

The device may still comprise at least one mechanism of cabling protection placed over, at least, the external tube and/or over, at least, one of the diameter transition elements.

### Brief description of the figures

For the sake of clarity, the characteristics and advantages of this invention shall be disclosed and described with the respective figures, that illustrate some preferential embodiments of the invention.
The figure 1 presents a perspective view of the transversal section of the magnetic device according to one embodiment of the invention.
The figure 2 represents an exploded perspective view of magnetic arrangement sections used in the arrangement of the magnetic device according to the figure 1.
The figure 3 represents an exploded perspective view of magnetic arrangement sections used in the arrangement of the magnetic device according to the figure 1, wherein the arrows identify the magnetic flow generated by these magnetic arrangement sections showing the Magnetic Flow Concentration Effect.
The figure 4 discloses a perspective view of the transversal section of the magnetic device in a modality of magnetic arrangement according to the invention, with a magnetic concentration plan.
The figure 5 discloses a side view of the transversal section of the magnetic device in a modality of magnetic arrangement according to the invention, with three magnetic concentration plans.
The figure 6 presents a side view of the transversal section of the magnetic device with a modality of magnetic arrangement according to the invention, with four magnetic concentration plans.
The figure 7 presents a side view of the magnetic device with openings for pressure equalization.
The figure 8 presents a side view of the magnetic device with mechanisms for cabling protection placed over the external tube.

### Detailed description of the invention

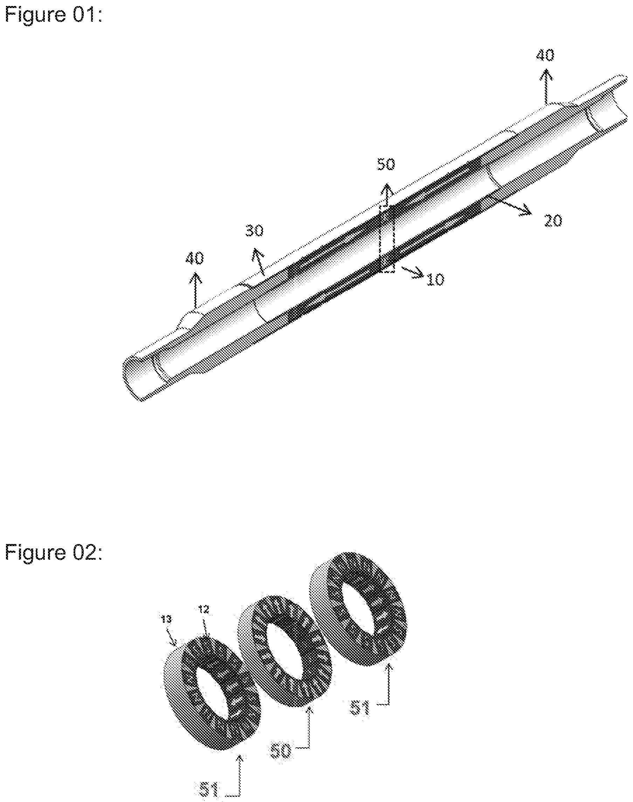

The figure 1 illustrates a preferential embodiment of the magnetic anti-scaling device of this invention. The device comprises a magnetic arrangement 10, confined between the external wall of at least one internal tube with fluid flow inside it 20 and the internal wall of an external tube 30. Each end of the piping segment containing fluid flow 20, that hosts the magnetic anti-scaling device, further comprises a diameter transition element 40, adapted to connect this magnetic device to piping.

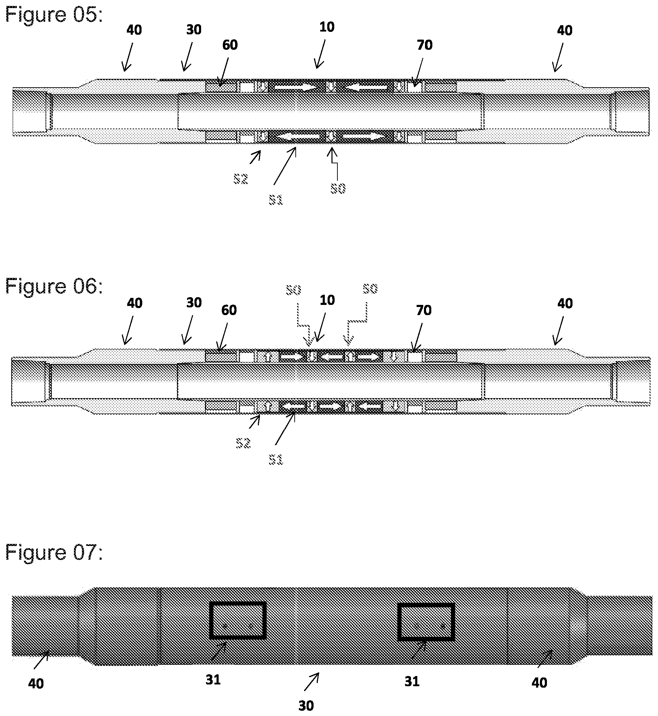

The external tube 30 protects the magnetic arrangement from side shocks and tear during handling, installation and use of the device. For applications at regions under high external pressure, the external tube 30 can contain a plurality of openings distributed on an axial and radial basis, so as to allow equalizing the external and internal pressures, as illustrated by the figure 7. Openings may present the form of round holes, tears, windows, or any format allowing pressure equalization, that reduces the risk of collapse at the external tube 30, and consequently damages to the magnetic arrangement 40.

Figure 1 still discloses the diameter transition elements 40 at each end of the device according to a preferential embodiment of the invention. In this case, the diameter transition elements 40 used were the crossovers. One of the ends of the crossover is gathered to the segment of piping with fluid flow 20 inside through a threaded connection (previously machined) or through welding, while the other end has a compatible diameter to be gathered to the remaining portion of the piping through either threaded connection or welding. Other diameter transition elements can also be used, such as flanges and couplings (elbows, unions). Even if welding is required at the ends of the diameter transition elements for coupling to the remaining portion of piping, such welding is far from the magnets used in the anti-scaling device, thus avoiding any interference in the magnetic effects of said magnets. No welding is used inside the anti-scaling device.

The selection of the material for the internal 20 and the external 30 tubes, as well as for the diameter transition elements 40 must consider its magnetic permeability. Preferably, one should opt for materials with magnetic permeability lower than, or slightly lower than 1, and more preferably with magnetic permeability (mir) from 0.99 to 1.01. One can use, for instance, nickel alloys (Inconel 718, 625), aluminum alloys, austenitic alloys, duplex alloys or super duplex alloys, cupper alloys and some stainless steels, as well as several polymers. One must also consider the temperature and the environment of the relevant site, and the required mechanic and corrosion resistance properties. In a preferential embodiment of the invention for submarine oil wells, the material used can be Inconel 718.

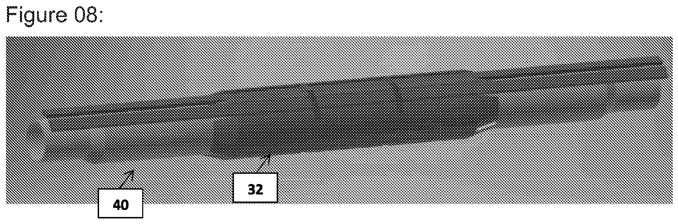

The anti-scaling device can still be provided with, at least, one mechanism for cabling protection 32, as illustrated by the figure 8, that has preferably the form of a cable duct extending through at least part of the device's extension, to the protection against chocks and collisions of cabling required for the piping, such as temperature and pressure sensor cables, or for valve actioning, among others. These cabling protection mechanisms 32 can be provided in a single piece or in segments and positioned over the external tube and/or over the diameter transition elements 40.

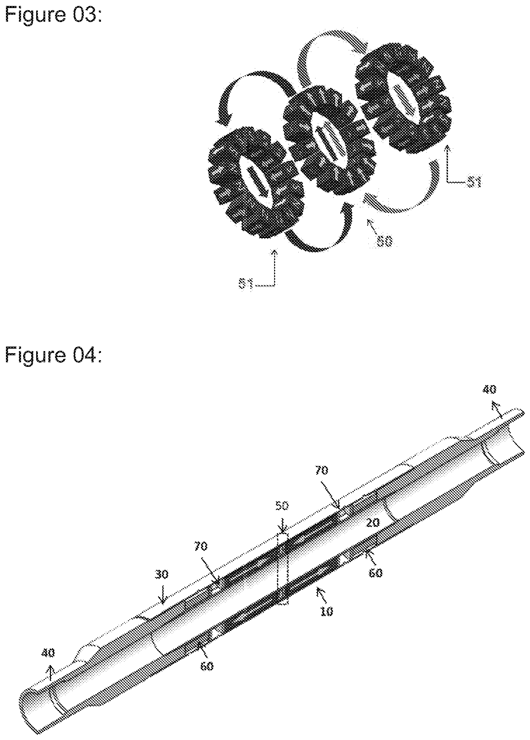

The magnetic arrangement 10 is formed by multiple magnetic arrangement sections longitudinally distributed around the internal tube with fluid flow inside it 20. Each section 11 is formed by a plurality of permanent magnets 12 radially affixed and distributed in a support 13. As illustrated by the figures 2 and 3, the axisymmetric magnetic arrangement 10 comprises at least one perpendicular magnetic arrangement section 50 with magnets the magnetic poles of which are perpendicularly oriented towards the wall of the non-ferromagnetic internal tube 20, and at least one parallel magnetic arrangement section 51 with magnets the magnetic poles of which are parallelly oriented towards the wall of the piping with fluid flow inside it. The magnetic arrangement sections disclosed by these figures comprise fourteen magnets; however, other numbers of magnets are acceptable, preferably pair, as explained below. The dimensions of magnets can also vary according to the design.

The magnetic arrangement sections can be configured in different manners. In one manner, the section can present the form of a perpendicular magnetic arrangement 50 that comprises a first segment containing half of the magnets, wherein all the poles are oriented towards a centripetal direction, and a second segment containing the other half of magnets, wherein all the poles are oriented towards a centrifugal direction. The section can also have the form of a parallel magnetic arrangement 12 that comprises a first segment containing half of the magnets, wherein all the poles are oriented towards a first sense parallelly to the tube, and a second segment containing the other half of magnets, wherein all the poles are oriented towards a second sense opposite to the first, and parallelly to the tube.

As illustrated by the diagram of arrows in the figure 3, the magnetic flow enters by the second segment of the perpendicular magnetic arrangement section 50 and leaves towards the two parallel magnetic arrangement sections 52, through which they enter into the segment containing magnets the poles of which are oriented to be distant from the perpendicular magnetic arrangement section 50. Then, the magnetic flow returns from each of the parallel magnetic arrangement sections 51 to the perpendicular magnetic arrangement section 50 through the segments containing magnets the poles of which are oriented towards the perpendicular magnetic arrangement section 50, by entering into this latter by the segment where all the poles are oriented towards the centripetal direction, thus ensuring a concentration of magnetic flow density inside this perpendicular magnetic arrangement section 50.

In one embodiment illustrated by the figure 4, three magnet arrangement sections 11 can be seen, namely one perpendicular magnetic arrangement section 50 with a parallel magnetic arrangement section 51 and each side. However, it is worth emphasizing that, according to its application and peculiarities, each device can be used with a different magnetic arrangement 10 as refers to the number and dimensions of the sections 50 and 51, and to the number and dimensions of the magnets.

The figure 5 illustrates a longitudinal cut of the device according to one embodiment, wherein the arrows indicate the direction of the pole of magnets 12. Considering this direction, the magnetic arrangement can be divided into three sectors: three diametral sectors in the form of perpendicular magnetic arrangement 50 and two lateral sectors in the form of parallel magnetic arrangement sections 51. As can be seen, the direction of the pole of magnets 12 from the lateral sectors of the parallel magnetic arrangements 51 is opposite and perpendicular to the direction of the poles of magnets 12 from the diametral sector in form of perpendicular magnetic arrangement 50. So, the magnetic flow density is amplified at the core region of the device and at the end, due to the effect of the lateral sectors 51, that compress the magnetic flow at the diametral sectors, thus favoring an intense magnetic flow in these regions, that traverses the piping in diametral sense (this is the origin of its designation - Diametral Sector). Then, the region created has an orthogonality between the Magnetic Flow Density and the Speed of fluid and particles thereof, which generates the anti-scaling effect on said particles. This effect, predominantly observed in the diametral sector, is also produced through the device axis, according to the details of the dimensions thereof. The various magnetic flows generated inside the segment of piping containing fluid flow put the fluid particles in phase and counterphase in the flow sense, which starts reducing the adhesion of particles to the wall of the piping. Additionally, this magnetic effect also contributes to form crystals with lower adhesion (such as aragonite and vaterite) than other crystal such as calcite (in the case of calcium carbonate), thus significantly improving the scale prevention in the magnetic device according to the invention.

As disclosed by the figure 6, the direction of the pole of magnets 12 from the parallel magnetic arrangements 51 is opposed and perpendicular to the direction of the poles of magnets 12 from the perpendicular magnetic arrangement 50. So, the magnetic flow density is concentrated at the diametral sector corresponding to the perpendicular magnetic arrangement 50 of the device.

The direction of the poles of each magnet 12 from each section 11 is selected for obtaining the effect of magnetic flow concentration as described above, wherein the magnets 12 of lateral sectors containing parallel magnetic arrangements 51 compress the magnetic flow at the diametral sector containing the perpendicular magnetic arrangement 50. This effect is achieved by arranging the magnets 12 in a specific standard similar to Halbach arrangement, but in an innovative axisymmetric configuration. For a better view of this arrangement with the polarities of magnets, the figure 7 discloses the perpendicular magnetic arrangement 50 of the diametral sector and the parallel magnetic arrangements of the two lateral sections 11 adjacent to the diametral sector 50 (one at each side of the diametral sector) in an exploded view, without supports.

Another determinant factor to the efficiency of the device is the selection of the material for permanent magnets 12. Obtaining a high value of magnetic flow density inside the internal tube 20 requires the selection of a magnet 12 with higher power, that fits the operational temperature of the device. A preferential embodiment of the invention uses NdFeB permanent magnets suitable for temperatures up to 120°C.

It is worth reiterating that different forms of magnetic arrangements can be used in the device. In addition to variations in the number and dimensions of magnets 12 from each section 11, it is also possible to vary the dimensions and the number of magnetic arrangements per diametral 50 and lateral 51, 52 sectors. Moreover, the magnetic flow concentration can also take place in different arrangements through the device and can even have more than one perpendicular magnetic arrangement section of diametral sector 50 in the same device. As disclosed by the figure 5, there can be a topology with thee diametral sections with perpendicular magnetic arrangements 50, or, as still illustrated by figure 6, a topology with four diametral sections with perpendicular magnetic arrangements 50, with possible variants to increase the number of diametral sections with perpendicular magnetic arrangements 50, according to the topology disclosed.

Among the possible variations in the topology for the device, one can use, at the ends of magnetic arrangement 10, diametral sectors with reinforcement perpendicular magnetic arrangement sections 52, as illustrated by figure 6, that, under certain conditions of device dimensioning, aim at reinforcing the magnetic flow at the ends of the device.

## Claims

1. Magnetic anti-scaling device, comprising:
a magnetic anti-scaling axisymmetric arrangement (10) confined between a non-ferromagnetic internal tube (20) with fluid flow inside it, an external tube (30) concentrically positioned in relation to the internal tube, and two diameter transition elements (40), each of them at one end of the external and internal tubes;
wherein the magnetic arrangement (10) is formed by at least one arrangement section comprising a plurality of permanent magnets (12) circumferentially arranged at a non-ferromagnetic cylindric support; and wherein the magnetic arrangement (10) presents at least a concentration plan (50) of the magnetic flow density in a perpendicular direction to the fluid flow,
**characterized in that**
the axisymmetric arrangement (10) comprises at least one perpendicular magnetic arrangement section (51) with magnets the magnetic poles of which are perpendicularly oriented towards the wall of the non-ferromagnetic internal tube (20), and at least one parallel magnetic arrangement section (52) with magnets the magnetic poles of which are parallelly oriented towards the wall of the piping with fluid flow inside it.

2. Magnetic anti-scaling device according to claim 1, **characterized in that** it comprises at least one absorber (60) within the space confined between the internal tubular element (20), the external tubular element (30) and the two diameter transition elements (40).

3. Magnetic anti-scaling device according to any of claims 1 or 2, **characterized in that** it comprises at least one spacer (70) within the space confined between the internal tubular element (20), the external tubular element (30) and the two diameter transition elements (40).

4. Magnetic anti-scaling device according to claim 3, **characterized in that** the spacer is made of nytril rubber.

5. Magnetic anti-scaling device according to any of preceding claims, **characterized in that** the external tube has openings for pressure equalization (31).

6. Magnetic anti-scaling device according to any of preceding claims, **characterized in that** it comprises at least one mechanism for cabling protection (32), arranged over at least one of the external tube and the diameter transition elements (40).

7. Magnetic anti-scaling device according to any of preceding claims, **characterized in that** the internal and external tubes and the diameter transition elements (40) are made of a material that has a relative magnetic permeability between 0.99 and 1.01.

8. Magnetic anti-scaling device according to claim 4, **characterized in that** the internal and external tubes and diameter transition elements (40) are made of one of nickel alloys (Inconel 718, 625), aluminum alloys, austenitic steels, duplex steels or super-duplex steels.

9. Magnetic anti-scaling device according to any of preceding claims, **characterized in that** the magnets arranged in the magnetic arrangement are NdFeB permanent magnets.

10. Magnetic anti-scaling device according to any of preceding claims, **characterized in that** the axisymmetric arrangement comprises a plurality of perpendicular magnetic arrangement sections (50) and a plurality of parallel magnetic arrangement sections (12) alternately arranged with each other, wherein parallel arrangements (12) are arranged at the two ends.

11. Magnetic anti-scaling device according to any one of the preceding claims, **characterized in that** the axisymmetric arrangement comprises a plurality of perpendicular magnetic arrangement sections (50) and a plurality of parallel magnetic arrangement sections (12) alternately arranged with each other, wherein perpendicular magnetic arrangement sections (50) are arranged at the two ends of the axisymmetric arrangement.

12. Magnetic anti-scaling device according to any one of the preceding claims, **characterized in that**, in the axisymmetric arrangement,
the perpendicular magnetic arrangement sections (50) are alternately arranged with poles orientation in opposite directions, and
the parallel magnetic arrangement sections (50) are alternately arranged with poles orientation in opposite directions.

13. Magnetic anti-scaling device according to any one of the preceding claims, **characterized in that** the axisymmetric arrangement comprises at least one perpendicular magnetic arrangement section (50) at the core portion, and a plurality of parallel magnetic arrangement sections (12) arranged at each side of the at least one perpendicular magnetic arrangement section (50), wherein the adjacent parallel magnetic arrangement sections (12) have the same poles orientation.

14. Magnetic anti-scaling device according to any of preceding claims, **characterized in that** the diameter transition elements (40) are selected from flanges, crossovers, threaded connections and welded connections.

15. Magnetic anti-scaling device according to claim 7, **characterized in that**
the perpendicular magnetic arrangement section (50) comprises a first segment comprising half of the magnets, wherein all the poles are oriented in the centripetal direction, and a second segment comprising the other half of magnets, wherein all the poles are oriented in the centrifugal direction;
the parallel magnetic arrangement section (12) comprises a first segment comprising half of the magnets, wherein all the poles are oriented in a first direction parallel to the tube, and a second segment comprising the other half of magnets, wherein all the poles are oriented in a second direction opposite to the first, parallel to the tube.

## Patentansprüche

1. Magnetische Antiverkrustungsvorrichtung umfassend:
eine achsensymmetrische magnetische Antiverkrustungsanordnung (10), eingeschlossen zwischen einem nicht-ferromagnetischen Innenrohr (20) mit Fluidfluss darin, einem Außenrohr (30), das konzentrisch zu dem Innenrohr angeordnet ist, und zwei Durchmesserübergangselementen (40), von denen jedes an einem Ende des Außen- und des Innenrohrs angeordnet ist;
wobei die Magnetanordnung (10) von wenigstens einem Anordnungsabschnitt gebildet wird, der eine Vielzahl von Permanentmagneten (12) umfasst, die umfangsseitig an einem nicht-ferromagnetischen zylindrischen Träger angeordnet sind; und wobei die Magnetanordnung (10) wenigstens eine Konzentrationsaufbau (50) der magnetischen Flussdichte in einer senkrechten Richtung zu dem Fluidfluss darstellt,
**dadurch gekennzeichnet, dass** die achsensymmetrische Anordnung (10) wenigstens einen senkrechten Magnetanordnungsabschnitt (51) mit Magneten umfasst, deren Magnetpole senkrecht zu der Wand des nicht-ferromagnetischen Innenrohrs (20) ausgerichtet sind, und wenigstens einen parallelen Magnetanordnungsabschnitt (52) mit Magneten, deren Magnetpole parallel zur Wand der Rohrleitung mit Fluidfluss darin ausgerichtet sind.

2. Magnetische Antiverkrustungsvorrichtung nach Anspruch 1, **dadurch gekennzeichnet, dass** sie wenigstens einen Absorber (60) in dem zwischen dem inneren rohrförmigen Element (20), dem äußeren rohrförmigen Element (30) und den beiden Durchmesserübergangselementen (40) eingeschlossenen Raum umfasst.

3. Magnetische Antiverkrustungsvorrichtung nach einem der Ansprüche 1 oder 2, **dadurch gekennzeichnet, dass** sie wenigstens einen Abstandshalter (70) in dem zwischen dem inneren rohrförmigen Element (20), dem äußeren rohrförmigen Element (30) und den beiden Durchmesserübergangselementen (40) eingeschlossenen Raum umfasst.

4. Magnetische Antiverkrustungsvorrichtung nach Anspruch 3, **dadurch gekennzeichnet, dass** der Abstandshalter aus Nitrilgummi besteht.

5. Magnetische Antiverkrustungsvorrichtung nach einem der vorstehenden Ansprüche, **dadurch gekennzeichnet, dass** das Außenrohr Öffnungen zum Druckausgleich (31) aufweist.

6. Magnetische Antiverkrustungsvorrichtung nach einem der vorstehenden Ansprüche, **dadurch gekennzeichnet, dass** sie wenigstens einen Mechanismus zum Verkabelungsschutz (32) umfasst, der über wenigstens einem von dem Außenrohr und den Durchmesserübergangselementen (40) angeordnet ist.

7. Magnetische Antiverkrustungsvorrichtung nach einem der vorstehenden Ansprüche, **dadurch gekennzeichnet, dass** das Innen- und das Außenrohr und die Durchmesserübergangselemente (40) aus einem Material bestehen, das eine relative magnetische Permeabilität zwischen 0,99 und 1,01 aufweist.

8. Magnetische Antiverkrustungsvorrichtung nach Anspruch 4, **dadurch gekennzeichnet, dass** das Innen- und das Außenrohr und die Durchmesserübergangselemente (40) aus einem von Nickellegierungen (Inconel 718, 625), Aluminiumlegierungen, austenitischen Stählen, Duplexstählen oder Super-Duplexstählen bestehen.

9. Magnetische Antiverkrustungsvorrichtung nach einem der vorstehenden Ansprüche, **dadurch gekennzeichnet, dass** die in der Magnetanordnung angeordneten Magnete NdFeB-Permanentmagnete sind.

10. Magnetische Antiverkrustungsvorrichtung nach einem der vorstehenden Ansprüche, **dadurch gekennzeichnet, dass** die achsensymmetrische Anordnung eine Vielzahl von senkrechten Magnetanordnungsabschnitten (50) und eine Vielzahl von parallelen Magnetanordnungsabschnitten (12) umfasst, die abwechselnd miteinander angeordnet sind, wobei an beiden Enden parallele Anordnungen (12) angeordnet sind.

11. Magnetische Antiverkrustungsvorrichtung nach einem der vorstehenden Ansprüche, **dadurch gekennzeichnet, dass** die achsensymmetrische Anordnung eine Vielzahl von senkrechten Magnetanordnungsabschnitten (50) und eine Vielzahl von parallelen Magnetanordnungsabschnitten (12) umfasst, die abwechselnd miteinander angeordnet sind, wobei an beiden Enden der achsensymmetrischen Anordnung senkrechte Magnetanordnungsabschnitte (50) angeordnet sind.

12. Magnetische Antiverkrustungsvorrichtung nach einem der vorstehenden Ansprüche, **dadurch gekennzeichnet, dass** in der achsensymmetrischen Anordnung
die senkrechten Magnetanordnungsabschnitte (50) abwechselnd mit Polorientierung in entgegengesetzten Richtungen und angeordnet sind, und
die parallelen Magnetanordnungsabschnitte (50) abwechselnd mit Polorientierung in entgegengesetzten Richtungen angeordnet sind.

13. Magnetische Antiverkrustungsvorrichtung nach einem der vorstehenden Ansprüche, **dadurch gekennzeichnet, dass** die achsensymmetrische Anordnung wenigstens einen senkrechten Magnetanordnungsabschnitt (50) an dem Kernabschnitt und eine Vielzahl von parallelen Magnetanordnungsabschnitten (12), die an jeder Seite des wenigstens einen senkrechten Magnetanordnungsabschnitts (50) angeordnet sind, umfasst, wobei die benachbarten parallelen Magnetanordnungsabschnitte (12) die gleiche Polorientierung aufweisen.

14. Magnetische Antiverkrustungsvorrichtung nach einem der vorstehenden Ansprüche, **dadurch gekennzeichnet, dass** die Durchmesserübergangselemente (40) ausgewählt sind aus Flanschen, Überkreuzungen, Gewindeverbindungen und geschweißten Verbindungen.

15. Magnetische Antiverkrustungsvorrichtung nach Anspruch 7, **dadurch gekennzeichnet, dass**
der senkrechte Magnetanordnungsabschnitt (50) ein erstes Segment, das die Hälfte der Magnete umfasst, wobei alle Pole in der Zentripetalrichtung ausgerichtet sind, und ein zweites Segment, das die andere Hälfte der Magnete umfasst, wobei alle Pole in der Zentrifugalrichtung ausgerichtet sind, umfasst;
wobei der parallele Magnetanordnungsabschnitt (12) ein erstes Segment, das die Hälfte der Magnete umfasst, wobei alle Pole in einer ersten Richtung parallel zu dem Rohr ausgerichtet sind, und ein zweites Segment, das die andere Hälfte der Magnete umfasst, wobei alle Pole in einer zweiten Richtung entgegengesetzt zu der ersten parallel zu dem Rohr ausgerichtet sind, umfasst.

## Revendications

1. Dispositif magnétique antitartre, comprenant :
un agencement magnétique antitartre axisymétrique (10) confiné entre un tube interne non ferromagnétique (20) dans lequel circule un fluide, un tube externe (30) positionné de façon concentrique par rapport au tube interne, et deux éléments de transition de diamètre (40), chacun d'eux étant à une extrémité des tubes externe et interne ;
dans lequel l'agencement magnétique (10) est formé par au moins une section d'agencement comprenant une pluralité d'aimants permanents (12) disposés circonférentiellement sur un support cylindrique non ferromagnétique ; et dans lequel l'agencement magnétique (10) présente au moins un plan de concentration (50) de la densité de flux magnétique dans une direction perpendiculaire à la circulation de fluide,
**caractérisé en ce que** l'agencement axisymétrique (10) comprend au moins une section d'agencement magnétique perpendiculaire (51) avec des aimants dont les pôles magnétiques sont orientés perpendiculairement vers la paroi du tube interne non ferromagnétique (20), et au moins une section d'agencement magnétique parallèle (52) avec des aimants dont les pôles magnétiques sont orientés parallèlement vers la paroi de la tuyauterie dans laquelle circule un fluide.

2. Dispositif magnétique antitartre selon la revendication 1, **caractérisé en ce qu'**il comprend au moins un absorbeur (60) à l'intérieur de l'espace confiné entre l'élément tubulaire interne (20), l'élément tubulaire externe (30) et les deux éléments de transition de diamètre (40).

3. Dispositif magnétique antitartre selon l'une quelconque des revendications 1 et 2, **caractérisé en ce qu'**il comprend au moins une entretoise (70) à l'intérieur de l'espace confiné entre l'élément tubulaire interne (20), l'élément tubulaire externe (30) et les deux éléments de transition de diamètre (40).

4. Dispositif magnétique antitartre selon la revendication 3, **caractérisé en ce que** l'entretoise est constituée de caoutchouc nitrile.

5. Dispositif magnétique antitartre selon l'une quelconque des revendications précédentes, **caractérisé en ce que** le tube externe comporte des ouvertures pour l'équilibrage de la pression (31).

6. Dispositif magnétique antitartre selon l'une quelconque des revendications précédentes, **caractérisé en ce qu'**il comprend au moins un mécanisme de protection du câblage (32), disposé sur le tube externe et/ou les éléments de transition de diamètre (40).

7. Dispositif magnétique antitartre selon l'une quelconque des revendications précédentes, **caractérisé en ce que** les tubes interne et externe et les éléments de transition de diamètre (40) sont constitués d'un matériau qui présente une perméabilité magnétique relative comprise entre 0,99 et 1,01.

8. Dispositif magnétique antitartre selon la revendication 4, **caractérisé en ce que** les tubes interne et externe et les éléments de transition de diamètre (40) sont constitués d'alliages de nickel (Inconel 718, 625), ou d'alliages d'aluminium, ou d'aciers austénitiques, ou d'aciers duplex, ou d'aciers super-duplex.

9. Dispositif magnétique antitartre selon l'une quelconque des revendications précédentes, **caractérisé en ce que** les aimants disposés dans l'agencement magnétique sont des aimants permanents en NdFeB.

10. Dispositif magnétique antitartre selon l'une quelconque des revendications précédentes, **caractérisé en ce que** l'agencement axisymétrique comprend une pluralité de sections d'agencement magnétique perpendiculaires (50) et une pluralité de sections d'agencement magnétique parallèles (12) disposées en alternance les unes par rapport aux autres, des agencements parallèles (12) étant disposés aux deux extrémités.

11. Dispositif magnétique antitartre selon l'une quelconque des revendications précédentes, **caractérisé en ce que** l'agencement axisymétrique comprend une pluralité de sections d'agencement magnétique perpendiculaires (50) et une pluralité de sections d'agencement magnétique parallèles (12) disposées en alternance les unes avec les autres, des sections d'agencement magnétique perpendiculaires (50) étant disposées aux deux extrémités de l'agencement axisymétrique.

12. Dispositif magnétique antitartre selon l'une quelconque des revendications précédentes, **caractérisé en ce que**, dans l'agencement axisymétrique,
les sections d'agencement magnétique perpendiculaires (50) sont disposées en alternance avec une orientation des pôles dans des directions opposées, et
les sections d'agencement magnétique parallèles (50) sont disposées en alternance avec une orientation des pôles dans des directions opposées.

13. Dispositif magnétique antitartre selon l'une quelconque des revendications précédentes, **caractérisé en ce que** l'agencement axisymétrique comprend au moins une section d'agencement magnétique perpendiculaire (50) au niveau de la partie noyau, et une pluralité de sections d'agencement magnétique parallèles (12) disposées de chaque côté de l'au moins une section d'agencement magnétique perpendiculaire (50), les sections d'agencement magnétique parallèles (12) adjacentes ayant la même orientation des pôles.

14. Dispositif magnétique antitartre selon l'une quelconque des revendications précédentes, **caractérisé en ce que** les éléments de transition de diamètre (40) sont choisis parmi des brides, des croisements, des raccords filetés et des raccords soudés.

15. Dispositif magnétique antitartre selon la revendication 7, **caractérisé en ce que**
la section d'agencement magnétique perpendiculaire (50) comprend un premier segment comprenant la moitié des aimants, tous les pôles étant orientés dans la direction centripète, et un deuxième segment comprenant l'autre moitié des aimants, tous les pôles étant orientés dans la direction centrifuge ;
la section d'agencement magnétique parallèle (12) comprend un premier segment comprenant la moitié des aimants, tous les pôles étant orientés dans une première direction parallèle au tube, et un deuxième segment comprenant l'autre moitié des aimants, tous les pôles étant orientés dans une deuxième direction opposée à la première, parallèle au tube.
